**Europäisches Patentamt**

**European Patent Office**

**Office européen des brevets**

(19)

(11) Veröffentlichungsnummer: **0 257 409**
**A1**

(12) # EUROPÄISCHE PATENTANMELDUNG

(21) Anmeldenummer: **87111443.5**

(22) Anmeldetag: **07.08.87**

(51) Int. Cl.4: **H04N 13/04**

(30) Priorität: **21.08.86 DE 3628458**

(43) Veröffentlichungstag der Anmeldung:
**02.03.88 Patentblatt 88/09**

(84) Benannte Vertragsstaaten:
**BE FR IT NL**

(71) Anmelder: **DORNIER SYSTEM GmbH**
**Postfach 1360**
**D-7990 Friedrichshafen(DE)**

(72) Erfinder: **Becker, Joachim, Dr.**
**Brodmannstrasse 1/7**
**D-7997 Immenstaad(DE)**
Erfinder: **Schofield, Roy**
**Hasenweg 6**
**D-7997 Immenstaad(DE)**

(74) Vertreter: **Landsmann, Ralf, Dipl.-Ing.**
**DORNIER GMBH - Patentabteilung - Kleeweg 3**
**D-7990 Friedrichshafen 1(DE)**

(54) **Vorrichtung zum räumlichen Sehen dreidimensionaler Fernsehbilder.**

(57) bei einer Vorrichtung zur Betrachtung stereoskopischer Bilder wird durch Befestigen zweier Kleinstmonitore (4, 6) an einer Kopfhalterung (3) eine möglichst große Bewegungsfreiheit und Ermüdungsvermeidung erzielt.

EP 0 257 409 A1

## Vorrichtung zum räumlichen Sehen dreidimensionaler Fernsehbilder

Die Erfindung betrifft eine Vorrichtung zur Betrachtung stereoskopisch aufgezeichneter Gegenstände oder Bewegungen als dreidimensionale Fernsehbilder auf Kleinstmonitoren.

Zur Betrachtung dreidimensionaler Bilder, in der Form von Photographien oder auch als Fernseh-und Kamerabilder, sind verschiedene Verfahren bekannt. Weitverbreitet ist die Rot-Grün-Brille, die zur Betrachtung von Bildern dient, die den zu betrachtenden Gegenstand, einmal durch einen roten Filter und einmal durch einen grünen Filter aufgenommen, dicht nebeneinanderliegend darstellen. Die beiden Gläser oder Folien der Brille, einmal rot und einmal grün gefärbt, lassen für das Auge jeweils nur das anders gefärbte Licht durchtreten. Die beiden Bilder in Rot und in Grün werden in Gehirn zu einem Bild zusammengesetzt und es entsteht ein optischräumlicher Eindruck. Bei der Spiegelbrille oder dem Spiegelkasten muß der Betrachter durch Verschieben die beiden Bilder, die von zwei Kameras aufgenommen wurden, zur Deckung bringen. Bei der Spiegelbrille besteht auch die Möglichkeit, zwei fest nebeneinanderliegende Bilder durch Kippen der beiden optischen Achsen im Betrachtungsgerät zueinander in Deckung zu bringen. Dies verursacht aber, durch die Nichtparallelität der optischen Achsen, ein angestrengtes Sehen. Bei der Prismenbrille werden zwei übereinanderliegende Bilder betrachtet, die ebenfalls zur Deckung gebracht werden müssen. Auch die Polarisationsbrille dient dazu, dem rechten und linken Auge des Betrachters nur die ihm jeweils zugedachte Information zukommen zu lassen.

Bei all diesen Verfahren der Betrachtung stereoskopischer Bilder ist der Beobachter immer gezwungen, eine bestimmte Position zu den beiden Bildern einzunehmen. Dadurch ist er in seiner Bewegungsfreiheit behindert und kann die Vorgänge die er beobachten will, nicht längerere Zeit entspannt verfolgen.

Helmgetragene Beobachtungssysteme sind aus der US-PS 39 16 094 bekannt. Dabei werden einem Beobachter Bilder eines Kontrollpultes und von einer Beobachtungskamera aufgenommene Bilder wahlweise auf einem Elektronenstrahlbildschirm projeziert. Der Bildschirm befindet sich in einem Helm und über die Kopfbewegungen des Beobachters werden die beiden aufnehmenden Kameras bewegt. Die US-PS betrifft eine Vorrichtung zur gleichzeitigen monoskopischen Betrachtung eines Kontrollpultes und der Bilder einer Beobachtungskamera.

Der Erfindung liegt die Aufgabe zugrunde, eine Vorrichtung zu schaffen, die es gestattet, stereoskopische Bilder möglichst ermüdungsfrei und mit einer größtmöglichen Bewegungsfreiheit zu betrachten.

Diese Aufgabe wird durch die Vorrichtung nach Haupt-und Unteransprüchen gelöst.

Zwei leichte, handelsübliche Kleinstmonitore werden parallel zueinander im Augenabstand des Beobachters montiert. Um die Monitore möglichst nahe an die Augen heranzuführen zu können, werden die Monitore mit Optiken versehen, die es auch gestatten, die Schärfe individuell auf das Auge einzustellen. Optiken und Monitore werden in einem Gehäuse eingebaut, das in Form eines handgehaltenen Fernglases ausgestaltet sein kann, oder das von einer auf dem Kopf sitzenden Haube getragen wird. Dadurch wird eine größtmögliche Bewegungsfreiheit erreicht, die dem Tragekomfort eines Kopfhörers entspricht.

Bei ausreichender Gewichtsminimierung von Monitoren und Optiken ist auch eine Halterung in Form eines Brillengestells denkbar. Von jedem Monitor wird dabei dem jeweiligen Auge die vorgesehene Bildinformation zugespielt und der Beobachter kann optisch-räumlich die entfernt aufgenommenen Bilder betrachten. Der Abstand zwischen Auge und Monitor ist nur abhängig von der Monitorgröße und der verwendeten Optik. Durch die Bewegungsfreiheit und die individuell angepassten Optiken wird die Ermüdung des Betrachters gesenkt. Auch eine Beobachtung über einen längeren Zeitraum, beispielsweise zur Steuerung eines Roboters oder anderer Handhabungsgeräte, ist verbessert möglich. Zur weiteren Steigerung der Bewegungsfreiheit, kann die Übersendung der Signale an die Monitore, statt über eine Drahtverbindung, auch drahtlos erfolgen.

Die Erfindung wird anhand von Figuren näher erläutert.

Es zeigen:

Figur 1 eine handgehaltene Betrachtungsvorrichtung in Form eines Fernglases,

Figur 2 ein Kopfgeschirr zur Halterung der Kleinstmonitore.

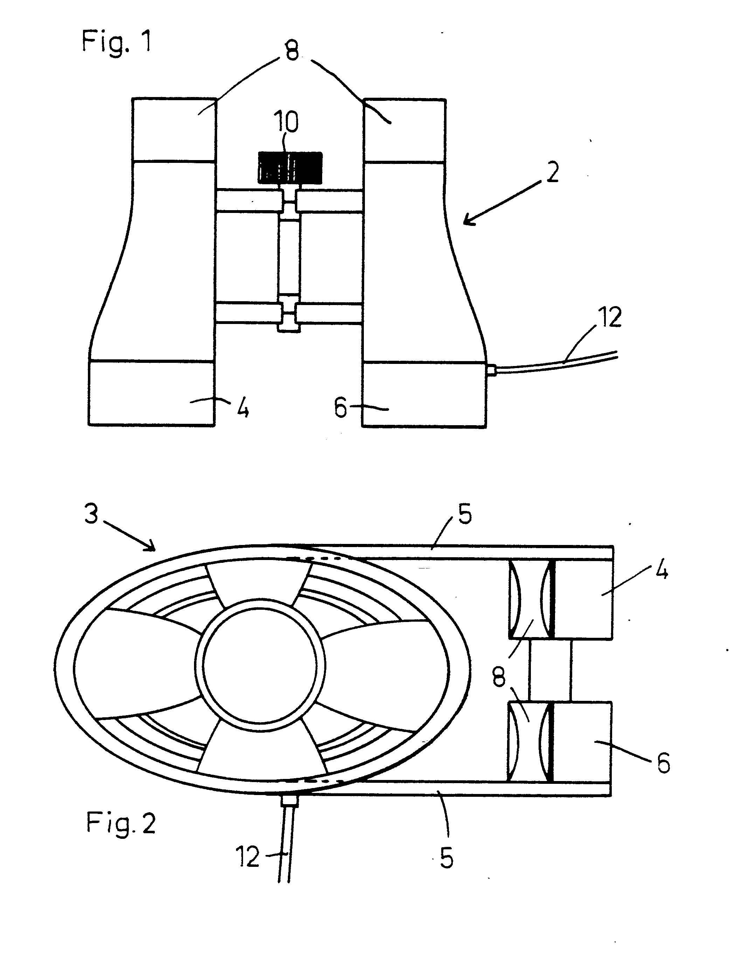

Figur 1 zeigt die erfindungsgemäße Betrachtungsvorrichtung in der Form eines Fernglases 2. Die Kleinstmonitore 4 und 6 sind in dem Gehäuse integriert und können durch die Optiken 8 betrachtet werden. Die Rändelschraube 10 dient der Verstellung und Anpassung der Optiken 8 und der Monitore 4, 6 an den jeweiligen Betrachter. Die Einspeisung der zu beobachtenden Bilder geschieht über die Zuleitung 12.

Figur 2 zeigt ein Kopfgeschirr 3, wie es vielfach verwendet wird, in der Draufsicht. An den seitlichen Bügeln 5 sind die beiden Kleinstmonitore 4 und 6 befestigt. Ebenso hängen die veränderbaren Optiken 8 an den Bügeln 5 vor den Monitoren. Die Optiken 8 sind durch Verschieben an den jeweiligen Betrachter anpassbar. Die Einspeisung erfolgt wiederum über die Zuleitung 12.

## Ansprüche

1. Vorrichtung zur Wiedergabe stereoskopisch aufgezeichneter Bilder, **gekennzeichnet** durch zwei zur Betrachtung nahe den Augen montierte Kleinstmonitore.

2. Vorrichtung nach Anspruch 1, dadurch gekennzeichnet, daß die Kleinstmonitore mit einstellbaren Optiken versehen sind.

3. Vorrichtung nach einem der Ansprüche 1 oder 2, dadurch gekennzeichnet, daß sie in einem handgehaltenen Gehäuse eingebaut ist.

4. Vorrichtung nach einem der Ansprüche 1 oder 2, dadurch gekennzeichnet, daß sie in einer am Kopf befestigten Halterung eingebaut ist.

Fig. 1

Fig. 2

## EINSCHLÄGIGE DOKUMENTE

EP 87111443.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - A1 - 3 134 646 (AUVICOM) | 1,4 | H 04 N 13/04 |
| Y | * Fig. 1; Seite 6, Zeilen 1-11; Anspruch 4 * | 2-4 | |
| | -- | | |
| Y | US - A - 4 559 555 (SCHOOLMAN) | 2,4 | |
| | * Fig. 5-7; Spalte 6, Zeilen 13-15 * | | |
| | -- | | |
| Y | GB - A - 2 146 877 (ANDREW CHAP- MAN) | 3,4 | |
| | * Fig. 13; Seite 4, Zeile 35 * | | |
| | ---- | | |

RECHERCHIERTE SACHGEBIETE (Int. Cl 4)

H 04 N 13/00
H 04 N 15/00

Der vorliegende Recherchenbericht wurde für alle Patentansprüche erstellt.

| Recherchenort | Abschlußdatum der Recherche | Prüfer |
|---|---|---|
| WIEN | 10-11-1987 | BENISCHKA |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82